# EUROPÄISCHE PATENTSCHRIFT

(11) **EP 3 408 119 B1**
(45) Veröffentlichungstag und Bekanntmachung des Hinweises auf die Patenterteilung: **21.07.2021**
(21) Anmeldenummer: 16708342.7
(22) Anmeldetag: 29.01.2016
(51) Int. Cl.: B60J 7/02

(54) **KRAFTFAHRZEUG MIT GEGENÜBER FAHRZEUGAUFBAU VERSTELLBAREM FAHRZEUGTEIL**
VEHICLE WITH ADJUSTABLE VEHICLE PART WITH RESPECT TO THE VEHICLE CONSTRUCTION
VÉHICULE AVEC PARTIE VÉHICULE RÉGLABLE PAR RAPPORT À LA CONSTRUCTION DE VÉHICULE

(43) Veröffentlichungstag der Anmeldung: 05.12.2018
(73) Patentinhaber: Webasto SE, 82131 Stockdorf (DE)
(72) Erfinder: BLENDL, Dominik, 82131 Stockdorf (DE); WEIDERER, Thomas, 82131 Stockdorf (DE)
(74) Vertreter: advotec.
(86) Internationale Anmeldenummer: PCT/DE2016/100037
(87) Internationale Veröffentlichungsnummer: WO 2017/129157

(56) Entgegenhaltungen:
- EP-A1- 1 857 311
- DE-A1-102004 031 661
- DE-B3-102009 011 473
- JP-A- H0 971 135
- JP-A- H07 276 995
- JP-A- H11 170 872
- JP-A- 2010 132 158

## Beschreibung

Die Erfindung betrifft ein Kraftfahrzeug mit einem Fahrzeugaufbau und einem Fahrzeugteil, das gegenüber dem Fahrzeugaufbau mittels eines Antriebskabels verstellbar ist, das zur Anbindung an das Fahrzeugteil mit einer Kunststoffumspritzung versehen ist.

Ein derartiges Kraftfahrzeug ist aus der Praxis bekannt und umfasst als verstellbares Fahrzeugteil ein aus Glas gefertigtes Deckelelement eines Dachöffnungssystems. Das Deckelelement ist über Gleiter in bezogen auf eine vertikale Fahrzeuglängsmittelebene beidseits angeordneten Führungsschienen geführt und so zwischen einer Schließstellung, in der ein Dachausschnitt mittels des Deckelelements verschlossen ist, und einer Freigabestellung verlagerbar, in der die Dachöffnung zumindest teilweise freigegeben ist. Zum Antrieb des Deckelelements sind die beidseits angeordneten Gleiter jeweils mit einem Antriebskabel verbunden, das als sogenanntes Steigungskabel ausgebildet ist und mittels eines gemeinsamen Antriebsmotors angetrieben ist. Zur Anbindung der Antriebskabel an die Gleiter sind die Antriebskabel jeweils mit einer Kunststoffumspritzung versehen.

Die Entwicklung bei Dachöffnungssystemen geht dahin, dass die Dachöffnungen und damit auch die korrespondierenden Deckelelemente immer größer und damit auch immer schwerer werden. Dies gilt insbesondere für sogenannte Spoilerdächer oder außenlaufende Schiebedächer, bei denen das Deckelelement ausgehend von der Schließstellung zunächst an seinem heckseitigen Rand ausgestellt und dann über einen heckseitigen Festdachabschnitt verfahren wird. Es ist aus Sicherheitsgründen erforderlich, dass das Deckelelement sich auch in einer Crashsituation nicht von dem Fahrzeugaufbau löst und eine zusätzliche unkontrollierte Gefährdung für Personen darstellt. Dies könnte eintreten, wenn die Kunststoffumspritzungen, über die die Antriebskabel an die Antriebsschlitten des Deckelelements angebunden sind, brechen bzw. abreißen, wodurch das Deckelelement Anhebekulissen durchbrechen könnte.

Ein Kraftfahrzeug mit den Merkmalen des Oberbegriffs des Patentanspruchs 1 ist aus der Druckschrift JP 2010-132158 A bekannt. Dieses Kraftfahrzeug umfasst ein verstellbares Deckelelement, das mittels eines Antriebskabels antreibbar ist. An einem Ende des Antriebskabels ist eine Kunststoffumspritzung ausgebildet, die einen Vorsprung aufweist, der mit einem Antriebsschlitten in Eingriff steht. Wenn das Deckelelement gegenüber einem Fahrzeugaufbau eine Beschleunigung erfährt, kann der Vorsprung abreißen. Dann fährt ein Keil in eine Bremsgabel ein, die mit der Kunststoffumspritzung verbunden ist. Damit ist eine Fangeinrichtung gebildet, die zumindest einen Teil der aus der Beschleunigung resultierenden kinetischen Energie aufnimmt bzw. ableitet. Die Bremsgabel wird hierbei aufgespreizt.

Der Erfindung liegt die Aufgabe zugrunde, ein Kraftfahrzeug der einleitend genannten Gattung zu schaffen, bei dem das Risiko eines Lösens des Fahrzeugteils von dem Fahrzeugaufbau weiter minimiert ist.

Diese Aufgabe ist erfindungsgemäß durch das Kraftfahrzeug mit den Merkmalen des Patentanspruches 1 gelöst.

Gemäß der Erfindung umfasst das Kraftfahrzeug also eine Lastabbaueinrichtung, die mindestens ein Koppelglied umfasst, das mit einer Fangeinrichtung zum Abbau von kinetischer Energie zusammenwirkt, die dem Fahrzeugteil im Fall einer Beschleunigung gegenüber dem Fahrzeugaufbau zuzumessen ist. Das Risiko eines Abreißens des Fahrzeugteils von dem Antriebskabel wird also dadurch verringert, dass die Ursache hierfür beseitigt wird. Die Ursache für ein potentielles Abreißen der Kunststoffumspritzung des Antriebskabels liegt nämlich darin, dass in einer Unfallsituation ein hoher Impuls von dem Fahrzeugteil auf die Kunststoffumspritzung ausgeübt werden kann. Durch die Lastabbaueinrichtung, die im Sinne der Erfindung mit dem Koppelglied und der Fangeinrichtung ausgebildet ist, kann der Impuls aber soweit verringert werden, dass beispielsweise eine einen großen Bauraum erfordernde Verstärkung der Kunststoffumspritzung des Antriebskabels oder auch einer Umspritzung eines Antriebsschlittens für das Fahrzeugteil nicht mehr notwendig ist.

Um den Abbau von kinetischer Energie gezielt realisieren zu können, umfasst die Fangeinrichtung nach der Erfindung Deformationselemente, die das Koppelglied bei der Relativbewegung zwischen dem Fahrzeugteil und dem Antriebskabel verformt und/oder zerstört. Das Koppelglied wirkt damit bei der Beschleunigung des Fahrzeugteils gegenüber dem Fahrzeugaufbau gezielt auf die Deformationselemente, die dadurch verformt, verbogen oder durchbrochen werden können. Die Deformationselemente sind von einer Verrippung der Fangeinrichtung gebildet.

Die Lastabbaueinrichtung des Kraftfahrzeugs nach der Erfindung kann wartungsfrei ausgelegt werden und hat keine beweglichen Bauteile, welche im Fahrbetrieb des Kraftfahrzeugs störende Geräusche erzeugen könnten. Die Lastabbaueinrichtung kann direkt in bestehende Komponenten, beispielsweise in die Kunststoffumspritzung des Antriebskabels und/oder einen Antriebsschlitten des Fahrzeugteils integriert werden, so dass bei der Montage, d. h. beim Anbinden des Antriebskabels an das Fahrzeugteil oder einen Antriebsschlitten des Fahrzeugteils keine zusätzlichen Schritte erforderlich sind.

Durch die Relativbewegung zwischen dem Fahrzeugteil und dem Antriebskabel wird durch die Bewegung des Koppelglieds in der Fangeinrichtung Energie abgebaut. Am Ende der Bewegung des Koppelglieds in der Fangeinrichtung ist die Last, die von dem Fahrzeugteil auf die Kunststoffumspritzung ausgeübt wird, soweit abgebaut, dass das Risiko eines Abreißens verringert bzw. minimiert ist. Damit wird das Fahrzeugteil über das Antriebskabel weiter an dem Fahrzeugaufbau gehalten. Das Fahrzeugteil kann also abgefangen werden, wobei die verbleibende, insbesondere aus einer Unfallsituation resultierende Energie auf die Kunststoffumspritzung übertragen wird. Diese Energie ist aber so gering, dass die Kunststoffumspritzung nicht abreißt. Es resultiert lediglich ein geringfügig gegenüber dem Fahrzeugaufbau verlagertes Fahrzeugteil, welches aber weiterhin über das Antriebskabel an dem Fahrzeugaufbau gehalten wird.

Bei einer speziellen Ausführungsform des Kraftfahrzeugs nach der Erfindung umfasst das Koppelglied einen in der Fangeinrichtung verfahrbaren Abschnitt, der eine Lasche, ein Zapfen, ein Bolzen oder dergleichen sein kann. Denkbar ist es insbesondere auch, zwei derartige Abschnitte vorzusehen, die in der Fangeinrichtung verfahrbar sind und über die jeweils ein Energieabbau erfolgt.

Das in der Fangeinrichtung verfahrbare Koppelglied kann starr mit dem Fahrzeugteil oder einem Schlitten des Fahrzeugteils verbunden sein, wobei die Fangeinrichtung der Kunststoffumspritzung des Antriebskabels zugeordnet ist. Bei einer Aktivierung der Lastbaueinrichtung, beispielsweise in einer Unfallsituation, führt das Koppelglied damit eine Bewegung in der Kunststoffumspritzung des Antriebskabels aus.

Bei einer alternativen Ausführungsform des Kraftfahrzeugs nach der Erfindung ist das in der Fangeinrichtung verfahrbare Koppelglied starr mit der Kunststoffumspritzung des Antriebskabels verbunden und die Fangeinrichtung dem Fahrzeugteil oder einem Schlitten des Fahrzeugteils zugeordnet. In diesem Falle führt das Koppelglied bei einer Aktivierung der Lastabbaueinrichtung also eine Bewegung an dem Fahrzeugteil oder einem Schlitten des Fahrzeugteils aus.

Die Verrippung ist vorzugsweise von Rippen, Zwischenwänden oder Stiften der Fangeinrichtung gebildet. Das Koppelglied fährt bei einer Aktivierung der Lastabbaueinrichtung sukzessive auf die einzelnen Deformationselemente auf, wobei durch jedes einzelne Deformationselement Energie abgebaut wird. Die Deformationselemente können quer zur Bewegungsrichtung des Koppelglieds durchgängig oder auch unterbrochen ausgebildet sein.

Bei einer speziellen Ausführungsform des Kraftfahrzeugs nach der Erfindung weist die Fangeinrichtung eine Ausnehmung auf, die von Zwischenwänden, Stegen und/oder Rippen, die die Deformationselemente bilden und Sollbruchstellen darstellen, durchsetzt ist. Das Koppelglied verfährt bei Nutzung der Lastabbaueinrichtung in der Ausnehmung und durchschlägt bzw. verformt die einzelnen Zwischenwände, Stege und/oder Rippen.

Eine besonders vorteilhafte Wirkung, d. h. ein besonders wirksamer Kraftabbau kann erreicht werden, wenn die Zwischenwände bei der Relativbewegung zwischen dem Fahrzeugteil und Antriebskabel in Bewegungsrichtung des Koppelglieds eine zunehmende Dicke haben. Zunächst wird dann also von dem Koppelglied die Zwischenwand mit der geringsten Dicke durchtrennt. Der von den Zwischenwänden ausgeübte Widerstand erhöht sich von Zwischenwand zu Zwischenwand.

Um zusätzlich eine Bremswirkung durch ein Zusammenwirken mit einer Führungsschiene zu erreichen, in der das Fahrzeugteil und das Antriebskabel geführt sind, ist es vorteilhaft, wenn sich die Ausnehmung in der Bewegungsrichtung des Koppelglieds bei der Relativbewegung zwischen dem Fahrzeugteil und dem Antriebskabel verjüngt. Das Koppelglied kann damit die Fangeinrichtung aufspreizen, wodurch sich diese zur Erhöhung der Reibkräfte in der korrespondierenden Führungsschiene verkeilt bzw. verklemmt.

Um eine Spreizbewegung der Fangeinrichtung möglichst definiert darstellen zu können, kann die Fangeinrichtung mindestens eine Spreizfläche aufweisen, auf die das Koppelglied bei der Relativbewegung zwischen dem Fahrzeugteil und dem Antriebskabel auffahrt.

Zur Erhöhung der Klemmwirkung zwischen der Fangeinrichtung und einer Führungsschiene weist die Fangeinrichtung bei einer speziellen Ausführungsform mindestens eine Bremskante auf, die bei dem Aufspreizen der Fangeinrichtung in eine Führungsfläche eingreift, die an einer Führungsschiene ausgebildet ist. Durch die Bremskante wird eine Keilgeometrie realisiert, die beim Aufspreizen der Fangeinrichtung den Energieabbau unterstützt und/oder realisiert.

Vorzugsweise ist die Fangeinrichtung von einem Blecheinleger der Kunststoffumspritzung gebildet. Alternativ ist es natürlich auch denkbar, dass die Fangeinrichtung von einem geeigneten Kunststoffeinleger mit günstigen Materialeigenschaften oder einem sonstigen Metallformteil gebildet ist.

Die Anbindung des Antriebskabels an seine Kunststoffumspritzung kann dadurch vergrößert werden, dass der Blecheinleger, der die Fangeinrichtung bildet, einen gewellten Längsrand hat, der mit einer Umwicklung eines als Steigungskabels ausgebildeten Antriebskabels korrespondiert.

Das Fahrzeugteil, das mittels der erfindungsgemäß ausgelegten Lastabbaueinrichtung eingefangen werden kann, ist bei einer speziellen Ausführungsform ein Deckelelement eines Schiebedachsystems, insbesondere ein Dachelement eines Spoilerdachs oder eines außen laufenden Schiebedachs, wobei die Lastabbaueinrichtung in einer Unfallsituation das gegenüber dem Fahrzeugaufbau beschleunigte Deckelelement abbremsen bzw. einfangen kann.

Weitere Vorteile und vorteilhafte Ausgestaltungen des Gegenstandes der Erfindung sind der Beschreibung, der Zeichnung und den Patentansprüchen entnehmbar.

Ausführungsbeispiele des Gegenstandes der Erfindung sind in der Zeichnung schematisch vereinfacht dargestellt und werden in der nachfolgenden Beschreibung näher erläutert. Es zeigt:
- Figur 1: eine Draufsicht auf ein Fahrzeugdach eines Kraftfahrzeuges nach der Erfindung mit einem Dachöffnungssystem;
- Figur 2: einen Antriebsschlitten für ein Deckelelement des Schiebedachsystems mit einer Lastabbaueinrichtung;
- Figur 3: eine alternative Ausführungsform eines Antriebsschlittens mit einer Kunststoffumspritzung eines Antriebskabels, in das eine Lastabbaueinrichtung integriert ist;
- Figur 4: eine im Wesentlichen Figur 3 entsprechende Ansicht eines Antriebsschlittens und einer Kunststoffumspritzung eines Antriebskabels mit einer alternativen Lastabbaueinrichtung;
- Figur 5: eine alternative Ausführungsform einer Lastabbaueinrichtung, die an einem Antriebsschlitten ausgebildet ist;
- Figur 6: eine weitere alternative Ausführungsform einer Lastabbaueinrichtung, die an einer Umspritzung eines Antriebskabels angeordnet ist;
- Figur 7: eine weitere Ausführungsform einer Lastabbaueinrichtung, die an einem Antriebsschlitten für einen Schiebedachdeckel ausgebildet ist;
- Figur 8: eine weitere Ausführungsform einer Lastabbaueinrichtung, die an einer Kunststoffumspritzung eines Antriebskabels angeordnet ist;
- Figur 9: eine Ausführungsform einer Lastabbaueinrichtung, die an einer Kunststoffumspritzung eines Antriebskabels ausgebildet ist und mit dem Antriebskabel in Eingriff steht;
- Figur 10: eine weitere alternative Ausführungsform einer Lastabbaueinrichtung mit Bremskeilen; und
- Figur 11: eine Ausführungsform einer Lastabbaueinrichtung mit Bremskeilen und Deformationselementen.

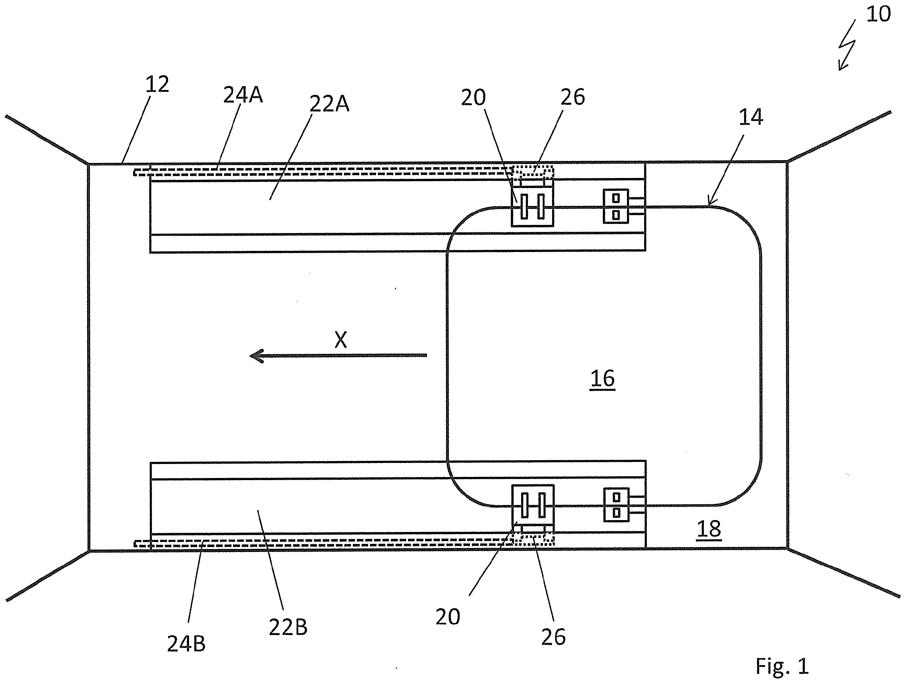

In Figur 1 ist ausschnittsweise ein als Personenkraftwagen ausgebildetes Kraftfahrzeug 10 mit einem Fahrzeugdach 12 dargestellt, welches mit einem als Schiebedachsystem 14 ausgebildeten Dachöffnungssystem versehen ist. Das Schiebedachsystem 14 umfasst ein Deckelelement 16, das zwischen einer Schließstellung, in der eine nicht näher dargestellte Dachöffnung verschlossen ist, und einer Freigabestellung verstellbar ist, in der die Dachöffnung zumindest teilweise freigegeben ist. In der in Figur 1 dargestellten Freigabestellung ist das Deckelelement 16 über einen heckseitig an die Dachöffnung angrenzenden Festdachabschnitt 18 verfahren.

Zum Antrieb ist das Deckelelement 16 bezogen auf eine vertikale Dachlängsmittelebene beidseits jeweils mit einem Antriebsschlitten 20 verbunden, welcher in einer jeweiligen Führungschiene 22A bzw. 22B in Fahrzeuglängsrichtung verschiebbar ist und mit einem jeweiligen Antriebskabel 24A bzw. 24B verbunden ist. Zur Anbindung an den jeweiligen Antriebsschlitten 20 weisen die Antriebskabel 24A und 24B jeweils eine Kunststoffumspritzung 26 auf, die mit einer Lasche oder dergleichen in eine korrespondierende Ausnehmung des jeweiligen Antriebsschlittens 20 eingreift.

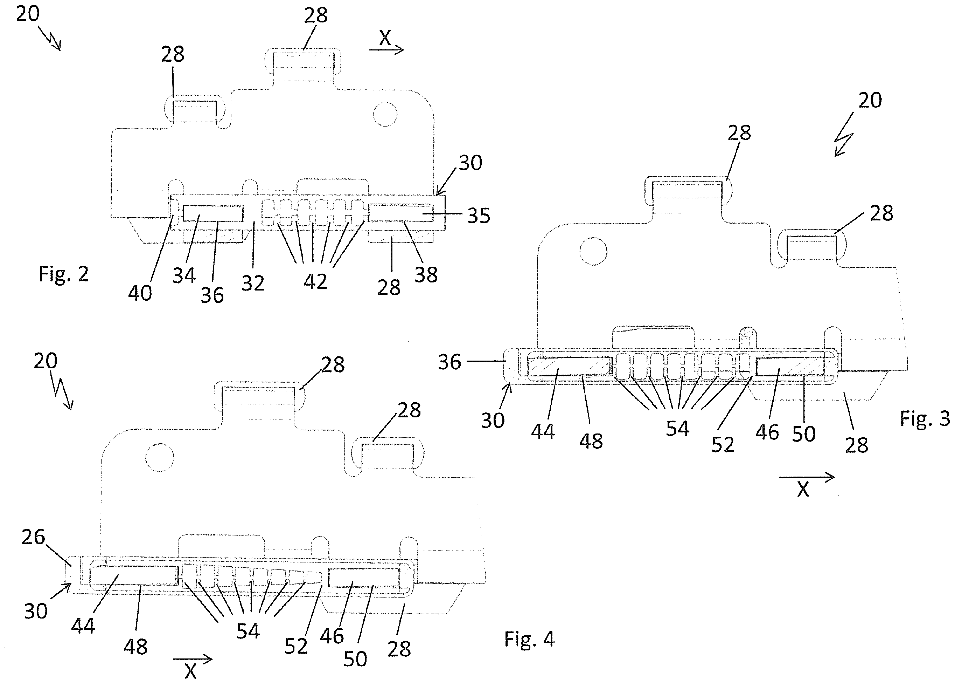

Eine Seitenansicht eines Antriebsschlittens 20 für das Deckelelement 16 ist in Figur 2 dargestellt. Der Antriebsschlitten 20, der über Gleiter 28 in korrespondierenden Führungskanälen der jeweiligen Führungsschiene 22A bzw. 22B geführt ist, weist im Anbindungsbereich zu dem jeweiligen Antriebskabel 24A bzw. 24B eine Lastabbaueinrichtung 30 auf, die aus einer als Blecheinleger ausgebildeten Fangeinrichtung 32 und aus Bolzen bzw. Zapfen 34 und 35 gebildet ist, die an der Kunststoffumspritzung 26 des jeweiligen Antriebskabels 24A bzw. 24B integriert sind und aus Metalleinlegern bestehen können.

Die an dem Antriebsschlitten 20 ausgebildete Fangeinrichtung 32 hat Ausnehmungen 36 und 38, in die die Bolzen 34 und 35 eingreifen, die ein Koppelglied darstellen und starr mit dem jeweiligen Antriebskabel 24A bzw. 24B verbunden sind. Die Ausnehmung 36 ist über einen Schlitz 40 nach außen geöffnet.

Die Ausnehmung 38 setzt sich ausgehend von der in Figur 2 dargestellten Montagestellung des Bolzens 34 in Richtung der Ausnehmung 36 fort, und zwar in der Form, dass sie durch Rippen 42, die regelmäßig beabstandet sind, unterbrochen ist. Die von oben und von unten in die Ausnehmung 38 eingreifenden Rippen bzw. Stifte 42 stellen Deformationselemente dar, die bei einem Verfahren des Bolzens 34 in der Ausnehmung 38 umgebogen werden und hierdurch kinetische Energie aufnehmen. Damit ist ein Lastabbau bei einer starken Beschleunigung des mit dem Antriebsschlitten 20 verbundenen Deckelelements 16 gegenüber dem Fahrzeugaufbau in Richtung des Pfeils X, das heißt in Fahrtrichtung, realisiert. Das Deckelelement 16 und die Antriebsschlitten 20 können somit gegenüber dem Antriebskabel 24A bzw. 24B, an das über die jeweilige Kunststoffumspritzung 26 die Bolzen 34 starr angebunden sind, eine Relativbewegung ausführen, wobei die kinetische Energie sukzessive über die Rippen 42 aufgenommen und abgebaut wird. Damit ist das Risiko minimiert, dass die Kunststoffumspritzungen 26 reißen und sich das Deckelelement 16 in einer Unfallsituation von dem Fahrzeugaufbau bzw. dem Fahrzeugdach 12 löst, in Vorwärtsfahrtrichtung schießt und eine zusätzliche Gefährdung darstellt.

In Figur 3 ist eine alternative Ausführungsform einer Lastabbaueinrichtung 30 dargestellt, bei der ein im Wesentlichen entsprechend dem in Figur 2 dargestellten Antriebsschlitten ausgebildeter Antriebsschlitten 20 zwei in Richtung der Kunststoffumspritzung 36 des jeweiligen Antriebskabels 24A bzw. 24B vorspringende Bolzen 44 und 46 aufweist, die in eine jeweilige Ausnehmung 48 bzw. 50 eingreifen, welche an einem Blecheinleger 52 der Kunststoffumspritzung 26 ausgebildet sind. Der Blecheinleger bildet eine Fangeinrichtung 52 einer Lastabbaueinrichtung 30.

Die Ausnehmung 48 der Fangeinrichtung 52 setzt sich ausgehend von der in Figur 3 dargestellten Montagestellung des ein Koppelglied darstellenden Bolzens 44 in Richtung der Ausnehmung 50 mit einer Art Leiterstruktur fort, die aus verformbaren Rippen 54 gebildet sind. Die Rippen 54, die von nach oben weisenden und von nach unten weisenden Stiften gebildet sind, sind verformbar und können bei einer Relativbewegung zwischen dem fest mit dem Deckelelement 16 verbundenen Antriebsschlitten 20 und dem zugeordneten Antriebskabel 24a bzw. 24B kinetische Energie aufnehmen, wobei sie verformt bzw. zerstört werden. Die Rippen 54 sind also Deformationselemente. Damit kann das Deckelelement 16 in einer Unfallsituation, in der es gegenüber dem Fahrzeugaufbau ausgehend von der Öffnungsstellung eine starke Beschleunigung in Richtung Fahrzeugbug (Pfeil X) erfährt, über die Erstreckung der Ausnehmung 48, die von den Rippen 54 unterbrochen ist, eine Relativbewegung gegenüber dem jeweiligen Antriebskabel 24A bzw. 24B ausführen. Hierbei wird durch die Verformung der Rippen 54 kinetische Energie abgebaut, wobei die verbleibende kinetische Energie beim Erreichen der der Ausnehmung 50 zugewandten Stirnseite der Ausnehmung 48 durch den Bolzen 44 hinreichend klein ist, damit kein Risiko eines Abreißens der Kunststoffumspritzung 26 besteht.

In Figur 4 ist ein Antriebsschlitten 20 zusammen mit einer Kunststoffumspritzung 26 eines Antriebskabels dargestellt, welche eine Lastabbaueinrichtung 30 umfasst, die im Wesentlichen entsprechend der Lastabbaueinrichtung gemäß Figur 3 ausgebildet ist, sich von dieser aber dadurch unterscheidet, dass sich die Ausnehmung 48 der Fangeinrichtung 52 im Bereich der Rippen 54 in Richtung der Ausnehmung 50 keilartig verjüngt. Damit werden für den Bolzen 44 beim Verfahren im Bereich der Rippen 54 in der Ausnehmung 48 Keil- bzw. Spreizflächen gebildet. Beim Auffahren des Bolzens 44 auf die Spreizflächen wird der Blecheinleger, der die Fangeinrichtung 52 bildet, aufgeweitet, was wiederum zu einer Aufweitung der Kunststoffumspritzung 26 in Hochrichtung führt, wodurch die Kunststoffumspritzung 26 des Antriebskabels 24A bzw. 24B in der korrespondierenden Führungsbahn der Führungsschiene verklemmt wird.

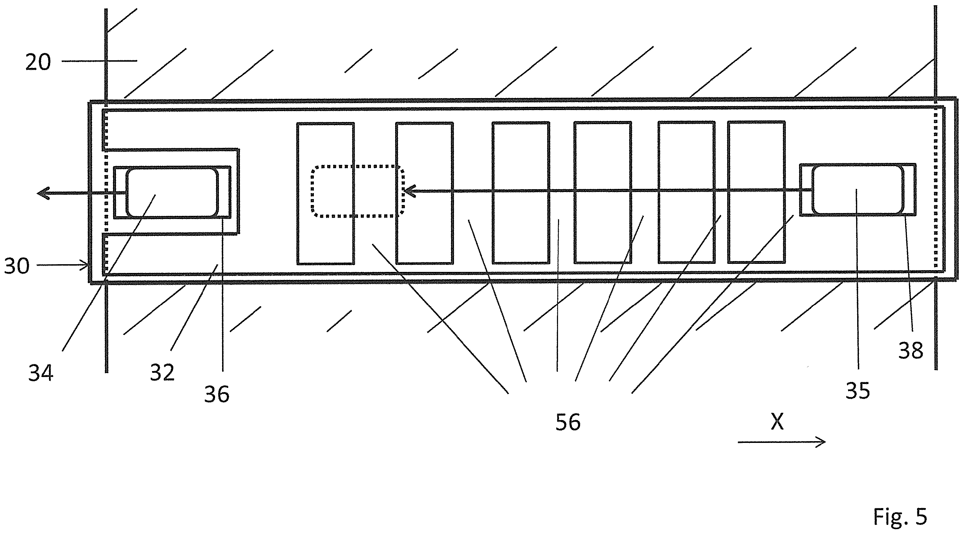

In Figur 5 ist eine weitere Ausführungsform einer an einen Antriebsschlitten eines Schiebedachdeckelelements angeordneten Fangeinrichtung 32 dargestellt, die weitgehend der Fangeinrichtung nach Figur 2 entspricht, sich von dieser aber dadurch unterscheidet, dass der die Fangeinrichtung 32 bildende Blecheinleger eine Art Leiterstruktur aufweist, die aus Rippen 56 gebildet ist, die in Hochrichtung durchgängig ausgebildet sind und ausgehend von einem Bolzen 35, der ein Koppelglied bildet und an das betreffende Antriebskabel angebunden ist, eine sukzessiv zunehmende Dicke bzw. Breite haben. Die Rippen 56, die die Ausnehmung 38 nach Art von Zwischenwänden unterbrechen, werden im Falle einer Beschleunigung des Deckelelements in Richtung des Pfeils X von dem Bolzen 35 durchschlagen, bis dieser in etwa die in Figur 5 gestrichelt dargestellte Endposition erreicht. Auf diesem Weg wird die kinetische Energie soweit abgebaut, dass das Risiko eines Abreißens der Kunststoffumspritzung 26 minimiert ist. Die Ausnehmung 38 ist also aus dem schmalen Montageabschnitt und einzelnen streifenartigen Durchbrüchen der Fangeinrichtung 32 zusammengesetzt, die durch die Rippen 56 voneinander getrennt sind.

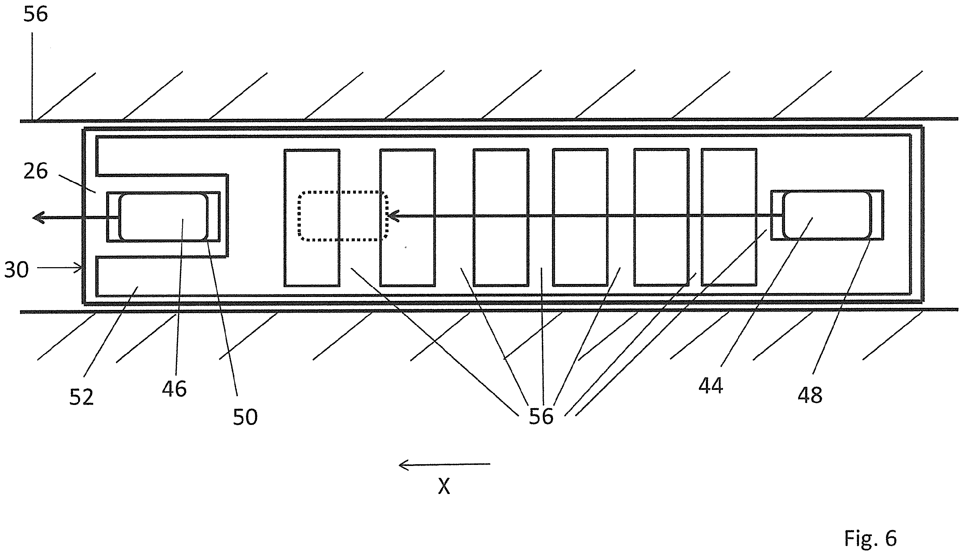

Figur 6 zeigt einen Blecheinleger, der in einer Kunststoffumspritzung 26 eines Antriebskabels für ein Deckelelement eines Schiebedachsystems angeordnet ist und als Fangeinrichtung 52 für Bolzen 44 und 46 dient, die ein Koppelglied darstellen und an einen Antriebsschlitten angebunden sind. Entsprechend der Ausführungsform nach Figur 5 hat die Fangeinrichtung 52 durchgängige Rippen 56, die ausgehend von der Montagestellung des Bolzens 44 in der Ausnehmung 48 eine zunehmende Dicke bzw. Breite haben. Die Funktion der so gebildeten Lastabbaueinrichtung 30 entspricht derjenigen der Lastabbaueinrichtung nach Figur 3, wobei bei einer Beschleunigung des mit dem Antriebsschlitten und den Bolzen 44 und 46 verbundenen Deckelelements 16 in Richtung des Pfeils X die Rippen 56 sukzessive von dem Bolzen 44 durchschlagen werden und kinetische Energie abgebaut wird. Auch hier setzt sich die Ausnehmung 48 aus dem schmalen Montageabschnitt und streifenförmigen Durchbrüchen des Blecheinlegers zusammen, die durch die Rippen 56 voneinander getrennt sind.

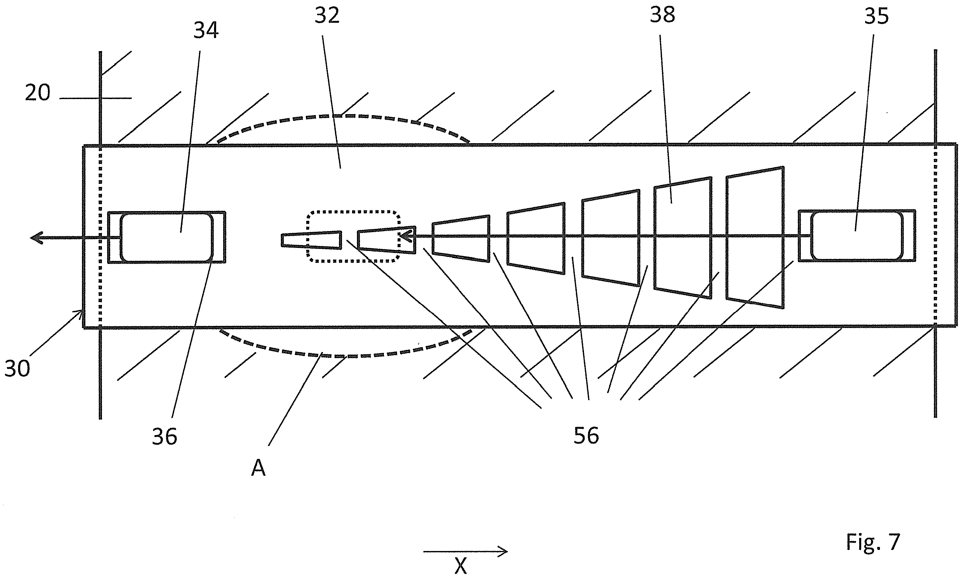

In Figur 7 ist eine Lastabbaueinrichtung 30 dargestellt, die aus einem an einem Antriebsschlitten 20 ausgebildeten Blecheinleger 32 gebildet ist. Der die Fangeinrichtung darstellende Blecheinleger 32 weist entsprechend der Ausführungsform nach Figur 5 eine Leiterstruktur auf, wobei sich die von den Rippen 56 der Leiterstruktur unterbrochene und auch einen schmalen Montageabschnitt für den Bolzen 35 aufweisende Ausnehmung 38 in Richtung der Ausnehmung 36, in der in der Montagestellung der Bolzen 34 des jeweiligen Antriebskabels angeordnet ist, verjüngt. Dadurch wird durch das Verfahren des Bolzens 35 in der Ausnehmung 38 und beim sukzessiven Durchschlagen der Rippen 56 der Blecheinleger 32 in dem Bereich A aufgeweitet, was in Verbindung mit einer Führungsbahn einer Führungsschiene eine zusätzliche Bremskraft auf das Deckelelement 16 ausüben kann.

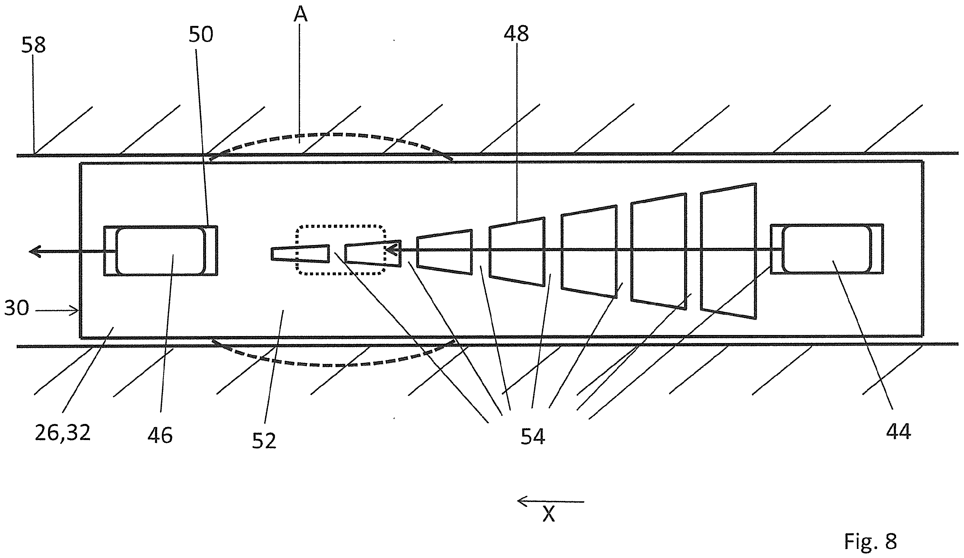

In Figur 8 ist eine weitere Ausführungsform einer Lastabbaueinrichtung 30 dargestellt, die eine als Blecheinleger ausgebildete Fangeinrichtung 52 aufweist, die in einer Kunststoffumspritzung eines Antriebskabels angeordnet ist und entsprechend der Ausführungsform nach Figur 4 eine sich verjüngende, durch Rippen 54 unterbrochene Ausnehmung 48 aufweist. Anders als bei der Ausführungsform nach Figur 4 sind die Rippen 54 aber nicht unterbrochen, sondern in Hochrichtung durchgängig ausgebildet. Durch die Verjüngung kann die Kunststoffumspritzung 26 des jeweiligen Antriebskabels 24A bzw. 24B zusätzlich in einer Führungsbahn 58 der jeweiligen Führungsschiene 22A bzw. 22B verklemmt werden, wenn der mit dem Antriebsschlitten 20 verbundene Bolzen 44 die Rippen 54 durchschlägt und den Blecheinleger 52 und die Kunststoffumspritzung 26 aufweitet bzw. aufspreizt.

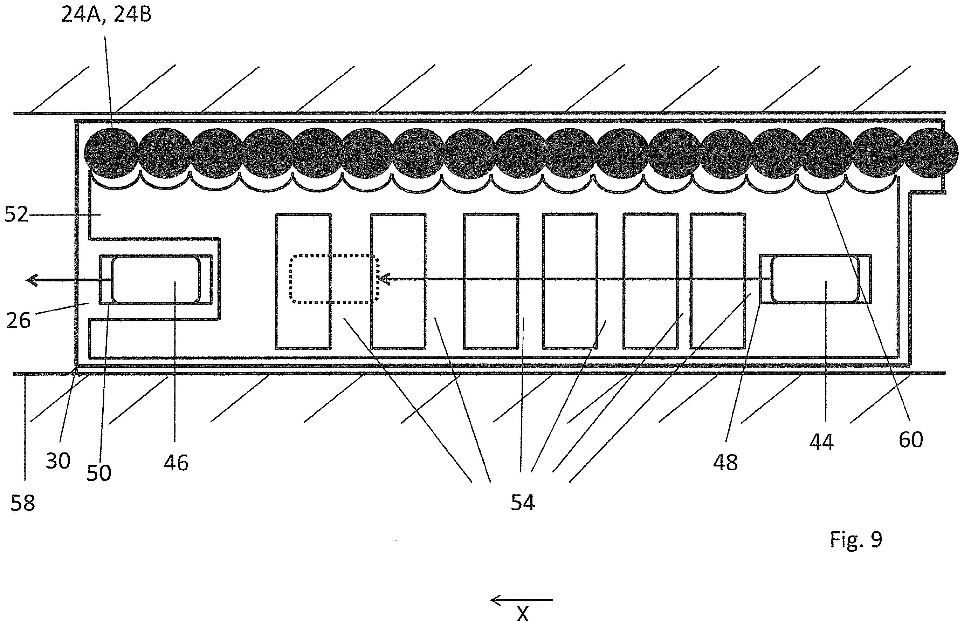

In Figur 9 ist eine weitere Ausführungsform einer Lastabbaueinrichtung 30 dargestellt, die im Wesentlichen derjenigen nach Figur 5 entspricht, sich von dieser aber dadurch unterscheidet, dass eine als Blecheinleger ausgebildete Fangeinrichtung 52 am oberen Rand eine Wellenstruktur 60 aufweist, in die eine schraubenartige Umwicklung eines als Steigungskabel ausgebildeten Antriebskabels 24 eingreift. Hierdurch wird die Verbindung zwischen dem Antriebskabel und der Lastabbaueinrichtung 30 stabilisiert. Im Übrigen entspricht die Lastabbaueinrichtung nach Figur 9 derjenigen nach Figur 5.

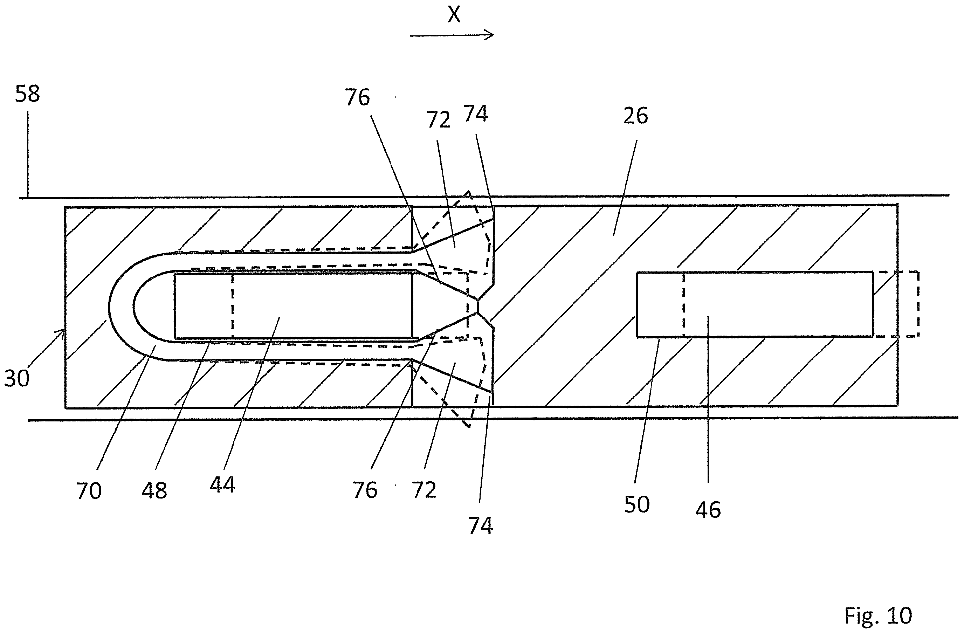

In Figur 10 ist eine Kunststoffumspritzung 26 eines ansonsten nicht näher dargestellten Antriebskabels eines Schiebedachsystems der in Figur 1 dargestellten Art gezeigt. In die Kunststoffumspritzung greifen entsprechend den obigen Ausführungsformen zwei Bolzen 44 und 46 eines Antriebsschlittens für ein Deckelelement eines Schiebedachsystems ein. Der Bolzen 44 ist von einer als Blecheinleger ausgebildeten Fangeinrichtung 70 aufgenommen, die im weitesten Sinne U-förmig ausgebildet ist und mit ihren Schenkeln eine Ausnehmung 48 begrenzt. Der Bolzen 46 ist von einer direkt in der Kunststoffumspritzung 26 ausgebildeten Ausnehmung 50 aufgenommen.

Die Fangeinrichtung 70, die zusammen mit dem Bolzen 40 eine Lastabbaueinrichtung 30 bildet, weist an ihren freien Schenkelenden jeweils einen Bremskeil 72 auf, der an seiner Außenseite mit einer Bremskante 74 versehen ist. An der der Ausnehmung 48 zugewandten Seite haben die Bremskeile 72 jeweils eine Spreizfläche 76, die bei Aktivierung der Lastabbaueinrichtung bzw. der Fangeinrichtung 32 als Auffahrrampe für den Bolzen 44 dienen.

Die in Figur 10 dargestellte Lastabbaueinrichtung arbeitet in nachfolgend beschriebener Weise.

Im Normalbetrieb des zugeordneten Schiebedachsystems sind die Bolzen 44 und 46 ortsfest in ihren Aufnahmen 48 und 50 aufgenommen, so dass eine Betätigung des Antriebskabels, an dem die Kunststoffumspritzung 26 angeformt ist, direkt in eine Verfahrbewegung des Antriebsschlittens umgesetzt wird, an dem die Bolzen 44 und 46 ausgebildet sind. Wenn nun aber in Öffnungsstellung des Deckelelements eine Unfallsituation vorliegt und das Deckelelement und damit der Antriebsschlitten und die mit dem Antriebsschlitten verbundenen Bolzen eine starke Beschleunigung in Richtung des Pfeils X, das heißt in Fahrzeugbugrichtung gegenüber dem Fahrzeugaufbau erfahren, fährt der Bolzen 44 in der in Figur 10 in gestrichelt dargestellten Art auf die Spreizflächen 76 der Fangeinrichtung 70 auf, was zu einem Aufspreizen derselben führt, wodurch die Bremskeile 72 in Richtung der Führungsflächen der Führungsbahn 58 verlagert werden und sich die Bremskanten 74 in den Führungsflächen verkrallen. Die kinematische Energie des Bolzens 44 bzw. des hiermit verbundenen Deckelelements wird damit über die Bremskeile 72 in die Führungsschiene eingeleitet, wodurch einem Abreißen der Kunststoffumspritzung 26 von dem Antriebskabel entgegengewirkt werden kann. Damit ist das Risiko eines Lösens des Deckelelements von dem Fahrzeugaufbau minimiert. Gleichzeitig mit der Relativbewegung des Bolzens 44 gegenüber der Kunststoffumspritzung 26 durchbricht der Bolzen 46 die in Bewegungsrichtung angeordnete, stirnseitige Begrenzungswand der Ausnehmung 50, wie in Figur 10 ebenfalls gestrichelt angedeutet ist.

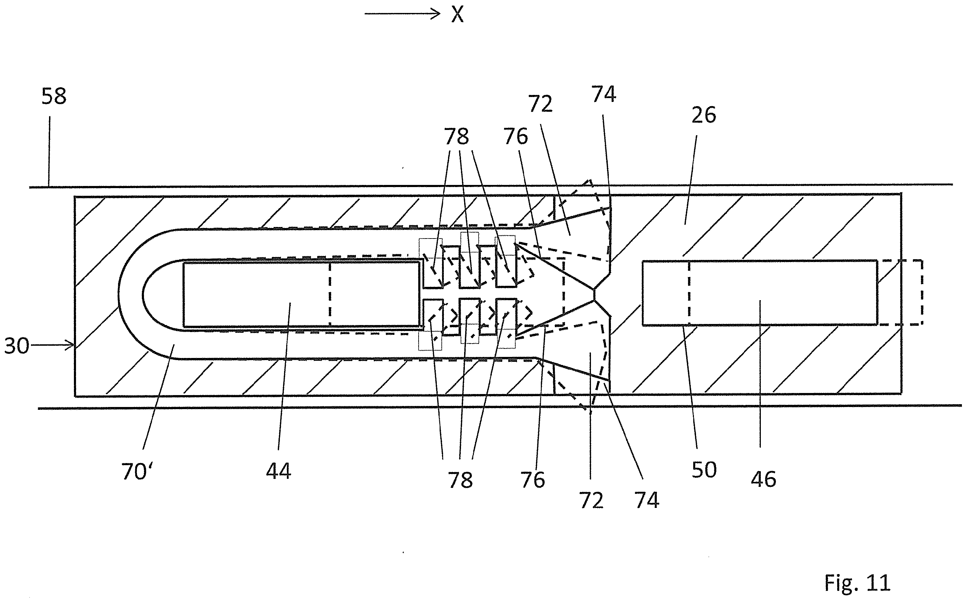

In Figur 11 ist eine weitere Ausführungsform einer Lastabbaueinrichtung 30 dargestellt, die weitgehend der Lastabbaueinrichtung nach Figur 10 entspricht, sich von dieser aber dadurch unterscheidet, dass die aus einem Blecheinleger gebildete Fangeinrichtung 70' an ihrer Innenseite Deformationselemente 78 aufweist, die in Form von Stiften oder unterbrochenen Rippen ausgebildet sind und im Normalbetrieb des zugeordneten Schiebedachsystems zwischen dem Bolzen 44 und den Spreizflächen 76 der Bremskeile 72 angeordnet sind.

In einer Unfallsituation, in der das mit den Bolzen 44 und 46 verbundene Deckelelement aus seiner Öffnungsstellung eine starke Beschleunigung gegenüber dem Fahrzeugaufbau in Richtung des Pfeils X erfährt, fährt der Bolzen 44 sukzessive auf die Deformationselemente 78 auf, wodurch diese verformt werden und kinetische Energie abgebaut wird. Nach dem Überfahren sämtlicher Deformationselemente 78 fährt der Bolzen auf die Spreizflächen 76 auf, so dass die Fangeinrichtung 70' aufgespreizt wird und sich die Bremskanten 74 der Bremskeile 72 in den Führungsflächen der Führungsbahn 58 verkrallen. Damit kann einem Abreißen der Kunststoffumspritzungen 26 und einem Lösen des Deckelelements von dem Fahrzeugaufbau entgegen gewirkt werden.

### Bezugszeichenliste

- 10: Kraftfahrzeug
- 12: Fahrzeugdach
- 14: Schiebedachsystem
- 16: Deckelelement
- 18: Festdachabschnitt
- 20: Antriebsschlitten
- 22A, B: Führungsschienen
- 24, 24A, B: Antriebskabel
- 26: Kunststoffumspritzung
- 28: Gleiter
- 30: Lastabbaueinrichtung
- 32: Fangeinrichtung
- 34: Bolzen
- 35: Bolzen
- 36: Ausnehmung
- 38: Ausnehmung
- 40: Schlitz
- 42: Rippen
- 44: Bolzen
- 46: Bolzen
- 48: Ausnehmung
- 50: Ausnehmung
- 52: Fangeinrichtung
- 54: Rippen
- 56: Rippen
- 58: Führungsbahn
- 60: Wellenstruktur
- 70, 70': Fangeinrichtung
- 72: Bremskeil
- 74: Bremskante
- 76: Spreizfläche
- 78: Deformationselement

## Patentansprüche

1. Kraftfahrzeug mit einem Fahrzeugaufbau und einem Fahrzeugteil, das gegenüber dem Fahrzeugaufbau mittels mindestens eines Antriebskabels (24, 24A, 24B) verstellbar ist, das zur Anbindung an das Fahrzeugteil mit einer Kunststoffumspritzung (26) versehen ist, wobei eine Lastabbaueinrichtung (30) vorgesehen ist, die mindestens ein Koppelglied umfasst, das im Fall einer Beschleunigung des Fahrzeugteils gegenüber dem Fahrzeugaufbau eine Relativbewegung zwischen dem verstellbaren Fahrzeugteil und dem Antriebskabel (24, 24A, 24B) erlaubt und das bei der Relativbewegung mit einer Fangeinrichtung (32, 52, 70, 70') zusammenwirkt, die zumindest einen Teil der aus der Beschleunigung resultierenden kinetischen Energie aufnimmt oder ableitet, wobei die Fangeinrichtung (32, 52, 70') Deformationselemente umfasst, die das Koppelglied bei der Relativbewegung zwischen dem Fahrzeugteil und dem Antriebskabel (24, 24A, 24B) verformt und/oder zerstört, **dadurch gekennzeichnet, dass** die Deformationselemente von einer Verrippung der Fangeinrichtung (32, 52, 70, 70') gebildet sind.

2. Kraftfahrzeug nach Anspruch 1, **dadurch gekennzeichnet, dass** das Koppelglied mindestens eine Lasche, einen Zapfen oder einen Bolzen (34, 44) umfasst, die bzw. der in der Fangeinrichtung (32, 52, 70, 70') verfahrbar ist.

3. Kraftfahrzeug nach Anspruch 1 oder 2, **dadurch gekennzeichnet, dass** das Koppelglied starr mit dem Fahrzeugteil oder einem Schlitten (20) des Fahrzeugteils verbunden ist und die Fangeinrichtung (52, 70, 70') der Kunststoffumspritzung (26) des Antriebskabels (24, 25A, 24B) zugeordnet ist.

4. Kraftfahrzeug nach Anspruch 1 oder 2, **dadurch gekennzeichnet, dass** das Koppelglied starr mit der Kunststoffumspritzung (26) des Antriebskabels (24, 24A, 24B) verbunden ist und die Fangeinrichtung (32) dem Fahrzeugteil oder einem Schlitten (20) des Fahrzeugteils zugeordnet ist.

5. Kraftfahrzeug nach einem der Ansprüche 1 bis 4, **dadurch gekennzeichnet, dass** die Verrippung von Zwischenwänden einer Ausnehmung (38, 48) der Fangeinrichtung (32, 52, 70') gebildet sind.

6. Kraftfahrzeug nach Anspruch 5, **dadurch gekennzeichnet, dass** die Zwischenwände in Bewegungsrichtung des Koppelglieds bei der Relativbewegung zwischen dem Fahrzeugteil und dem Antriebskabel (24, 24A, 24B) eine zunehmende Dicke haben.

7. Kraftfahrzeug nach Anspruch 5 oder 6, **dadurch gekennzeichnet, dass** sich die Ausnehmung (38, 48) in der Bewegungsrichtung des Koppelglieds bei der Relativbewegung zwischen dem Fahrzeugteil und dem Antriebskabel (24, 24A, 24B) verjüngt.

8. Kraftfahrzeug nach einem der Ansprüche 1 bis 7, **dadurch gekennzeichnet, dass** die Fangeinrichtung (32, 52, 70, 70') von einem Blecheinleger der Kunststoffumspritzung gebildet ist.

9. Kraftfahrzeug nach Anspruch 8, **dadurch gekennzeichnet, dass** der Blecheinleger einen gewellten Längsrand hat, der mit einer Umwicklung eines als Steigungskabel ausgebildeten Antriebskabels (24) korrespondiert.

10. Kraftfahrzeug nach einem der Ansprüche 1 bis 9, **dadurch gekennzeichnet, dass** sich die Fangeinrichtung (32, 52, 70, 70') bei der Relativbewegung zwischen dem Fahrzeugteil und dem Antriebskabel (24, 24A, 24B) aufspreizt.

11. Kraftfahrzeug nach Anspruch 10, **dadurch gekennzeichnet, dass** die Fangeinrichtung mindestens eine Spreizfläche (76) aufweist, auf die das Koppelglied bei der Relativbewegung zwischen dem Fahrzeugteil und dem Antriebskabel (24, 24A, 24B) auffährt.

12. Kraftfahrzeug nach Anspruch 10 oder 11, **dadurch gekennzeichnet, dass** die Fangeinrichtung (70, 70') mindestens eine Bremskante (74) aufweist, die bei dem Aufspreizen der Fangeinrichtung (70, 70') in eine Führungsfläche eingreift, die an einer Führungsschiene ausgebildet ist.

13. Kraftfahrzeug nach einem der Ansprüche 1 bis 12, **dadurch gekennzeichnet, dass** das Fahrzeugteil ein Deckelelement (16) eines Schiebedachsystems (14) ist.

## Claims

1. A motor vehicle having a vehicle structure and a vehicle part that can be displaced relative to the vehicle structure with the aid of at least one drive cable (24, 24A, 24B) that is provided with a plastics injection moulded section (26) for joining the drive cable to the vehicle part, a load reduction means (30) being provided that comprises at least one coupling member which allows a relative movement between the displaceable vehicle part and the drive cable (24, 24A, 24B) in the case of an acceleration of the vehicle part relative to the vehicle structure and which interacts with a catch means (32, 52, 70, 70') during the relative movement, said catch means absorbing or discharging at least part of the kinetic energy resulting from the acceleration, said catch means (32, 52, 70') comprising deformation elements that are deformed and/or destroyed by the coupling member during the relative movement between the vehicle part and the drive cable (24, 24A, 24B), **characterised in that** the deformation elements are formed by a ribbing of the catch means (32, 52, 70, 70').

2. The motor vehicle according to claim 1, **characterised in that** the coupling member comprises at least a tab, a pin or a stud (34, 44) that can be advanced in the catch means (32, 52, 70, 70').

3. The motor vehicle according to claim 1 or 2, **characterised in that** the coupling member is connected to the vehicle part or to a slide (20) of the vehicle part in a rigid fashion and **in that** the catch means (52, 70, 70') is assigned to the plastics injection moulded section (26) of the drive cable (24, 25A, 24B).

4. The motor vehicle according to claim 1 or 2, **characterised in that** the coupling member is connected to the plastics injection moulded section (26) of the drive cable (24, 24A, 24B) in a rigid fashion and **in that** the catch means (32) is assigned to the vehicle part or to a slide (20) of the vehicle part.

5. The motor vehicle according to any one of the claims 1 to 4, **characterised in that** the ribbing is formed by partition walls of a recess (38, 48) of the catch means (32, 52, 70').

6. The motor vehicle according to claim 5, **characterised in that** the thickness of the partition walls grows in the direction of movement of the coupling member during the relative movement between the vehicle part and the drive cable (24, 24A, 24B).

7. The motor vehicle according to claim 5 or 6, **characterised in that** the recess (38, 48) is tapered in the direction of movement of the coupling member during the relative movement between the vehicle part and the drive cable (24, 24A, 24B).

8. The motor vehicle according to any one of the claims 1 to 7, **characterised in that** the catch means (32, 52, 70, 70') is formed by a sheet metal insert of the plastics injection moulded section.

9. The motor vehicle according to claim 8, **characterised in that** the sheet metal insert has a corrugated longitudinal edge that corresponds to a wrapping of a drive cable (24) that is realised as a gradient cable.

10. The motor vehicle according to any one of the claims 1 to 9, **characterised in that** the catch means (32, 52, 70, 70') is spread open during the relative movement between the vehicle part and the drive cable (24, 24A, 24B).

11. The motor vehicle according to claim 10, **characterised in that** the catch means includes at least one spreading surface (76) against which the coupling member is traversed during the relative movement between the vehicle part and the drive cable (24, 24A, 24B).

12. The motor vehicle according to claim 10 or 11, **characterised in that** the catch means (70, 70') includes at least one braking rim (74) that engages a guide surface when the catch means (70, 70') is being spread open, said guide surface being realised at a guide rail.

13. The motor vehicle according to any one of the claims 1 to 12, **characterised in that** the vehicle part is a lid member (16) of a sliding roof system (14).

## Revendications

1. Véhicule automobile ayant une caisse de véhicule et une pièce de véhicule qui est déplaçable par rapport à la caisse de véhicule moyennant au moins un câble d'entraînement (24, 24A, 24B) qui est pourvu d'un enrobage (26) en matière plastique pour relier le câble d'entraînement (24, 24A, 24B) avec la pièce de véhicule, une unité de suppression de charges (30) étant prévue qui comprend au moins un élément de couplage qui permet un mouvement relatif entre la pièce de véhicule déplaçable et le câble d'entraînement (24, 24A, 24B) dans le cas d'une accélération de la pièce de véhicule par rapport à la caisse de véhicule et coopère avec un dispositif de capture (32, 52, 70, 70') lors du mouvement relatif, ledit dispositif de capture (32, 52, 70') absorbant ou déversant l'énergie cinétique qui résulte de l'accélération au moins en partie, et ledit dispositif de capture (32, 52, 70') comprenant des éléments de déformation qui sont déformés et/ou détruits par l'élément de couplage lors du mouvement relatif entre la pièce de véhicule et le câble d'entraînement (24, 24A, 24B), **caractérisé en ce que** les éléments de déformation sont formés d'une nervure du dispositif de capture (32, 52, 70, 70').

2. Véhicule automobile selon la revendication 1, **caractérisé en ce que** l'élément de couplage comprend au moins une éclisse, un maneton ou un goujon (34, 44) qui peut être décalé dans le dispositif de capture (32, 52, 70, 70').

3. Véhicule automobile selon la revendication 1 ou 2, **caractérisé en ce que** l'élément de couplage est raccordé à la pièce de véhicule ou un chariot (20) de la pièce de véhicule de manière rigide et **en ce que** le dispositif de capture (52, 70, 70') est associé à l'enrobage (26) en matière plastique du câble d'entraînement (24, 25A, 24B).

4. Véhicule automobile selon la revendication 1 ou 2, **caractérisé en ce que** l'élément de couplage est raccordé à l'enrobage (26) en matière plastique du câble d'entraînement (24, 24A, 24B) de manière rigide et **en ce que** le dispositif de capture (32) est associé à la pièce de véhicule ou un chariot (20) de la pièce de véhicule.

5. Véhicule automobile selon l'une quelconque des revendications 1 à 4, **caractérisé en ce que** la nervure est formée par des parois de séparation d'une cavité (38, 48) du dispositif de capture (32, 52, 70').

6. Véhicule automobile selon la revendication 5, **caractérisé en ce que** l'épaisseur des parois de séparation croît dans la direction de mouvement de l'élément de couplage lors du mouvement relatif entre la pièce de véhicule et le câble d'entraînement (24, 24A, 24B).

7. Véhicule automobile selon la revendication 5 ou 6, **caractérisé en ce que** la cavité (38, 48) s'effile dans la direction de mouvement de l'élément de couplage lors du mouvement relatif entre la pièce de véhicule et le câble d'entraînement (24, 24A, 24B).

8. Véhicule automobile selon l'une quelconque des revendications 1 à 7, **caractérisé en ce que** le dispositif de capture (32, 52, 70, 70') est formé par un insert en tôle de l'enrobage en matière plastique.

9. Véhicule automobile selon la revendication 8, **caractérisé en ce que** l'insert en tôle a une bordure longitudinale ondulée qui correspond à un enveloppement d'un câble d'entraînement (24) réalisé comme câble hélicoïdal.

10. Véhicule automobile selon l'une quelconque des revendications 1 à 9, **caractérisé en ce que** le dispositif de capture (32, 52, 70, 70') se déploie lors du mouvement relatif entre la pièce de véhicule et le câble d'entraînement (24, 24A, 24B).

11. Véhicule automobile selon la revendication 10, **caractérisé en ce que** le dispositif de capture présente au moins une surface à expansion (76), l'élément de couplage tamponnant ladite surface à expansion (76) lors du mouvement relatif entre la pièce de véhicule et le câble d'entraînement (24, 24A, 24B).

12. Véhicule automobile selon la revendication 10 ou 11, **caractérisé en ce que** le dispositif de capture (70, 70') présente au moins une arête de frein (74) qui s'engage avec une surface de guidage quand le dispositif de capture (70, 70') se déploie, ladite surface de guidage étant réalisée à un rail de guidage.

13. Véhicule automobile selon l'une quelconque des revendications 1 à 12, **caractérisé en ce que** la pièce de véhicule est un élément de recouvrement (16) d'un système de toit ouvrant (14).
